# EUROPEAN PATENT APPLICATION

(11) **EP 2 607 043 A1**
(43) Date of publication of application: **26.06.2013**
(21) Application number: 11010017.9
(22) Date of filing: 20.12.2011
(51) Int. Cl.: B29C 45/17

(54) **Liquid carbon dioxide cooling of gas channel formed with gas injection molding**

(71) Applicant: Linde Aktiengesellschaft, 80331 Munich (DE)
(72) Inventor: Orsén, Mikael, 93136 Trelleborg (SE); Praller, Andreas, 82110 Germering (DE)
(74) Representative: Gellner, Bernd

(57) **Abstract**

The invention relates to a method for producing a part (P) out of a molding material (M), comprising the steps of: injecting molding material (M) in a flowable state into a cavity (100) of a molding tool (10) in order to form a part (P), injecting a gas (G) into said cavity (100) so that said injected gas (G) pushes away the molding material (M) in order to form at least one hollow space (101) into said part (P), and discharging said gas (G) out of the hollow space (101) after forming said hollow space (101). According to the invention carbon dioxide (G') having a higher heat capacity and/or density than said gas (G) is injected into said at least one hollow space (101) of said part (P) in order to cool said part (P).

## Description

The invention relates to a method for gas injection molding of a part, particularly a plastic part according to the preamble of claim 1.

Methods of the afore-mentioned kind are especially used when producing thermoplastic products. The respective molding tools usually consist of two components defining a cavity when put together for taking up the molding material in a liquefied state (e.g. some thermoplastic material). The cavity (negative form) thereby defines the shape and surface of the final product or part. The product can be taken out of the molding tool or out of the cavity after a cooling period, i.e., once the product has reached a certain temperature. Of course, it is also possible that a molding tool defines a plurality of cavities.

In a gas injection molding method an inert gas, for instance nitrogen, is injected at a pressure of 50 bar to 300 bar into the molding material that was filled in a cavity of a molding tool in beforehand in order to shape a hollow space in the molding material, i.e., in the part. Then, normally, a lower pressure (sometimes called after pressure) of particularly 40 bar to 150 bar is kept in said hollow space to properly maintain said hollow space in order to achieve a good quality, especially a good surface quality, of the final part.

However, the afore-described method shows rather long cycle times since cooling of the part formed out of the molding material mainly occurs from the mold surface on the outside of said part.

Thus, the problem underlying the present invention is to provide for a method of the afore-mentioned kind that is improved concerning its cycle time.

This problem is solved by a method having the features of claim 1.

According thereto, said method for producing a part out of a molding material comprises the steps of:
- injecting a molding material in a flowable state into a cavity of a molding tool in order to form a part comprising an outer side defined by an inner side of said molding tool defining said cavity,
- injecting a gas into said cavity so that for instance said injected gas pushes away at least a fraction of the molding material in order to form at least one hollow space into said part, i.e. the molding material may be pushed towards said inner side of the cavity so that a hollow space is formed in said part,
- discharging the gas out of the molding tool (i.e. out of said hollow space) after forming said hollow space,
- injecting carbon dioxide or a mixture comprising carbon dioxide having a higher specific heat capacity at constant pressure or constant volume and/or a higher density than said gas into said at least one hollow space of said part in order to cool said part.

The molding material being in a flowable, fluid or liquid state thereby means that the molding material comprises upon the molding process a viscosity that allows for injecting the molding material into said cavity so that the desired part can be formed.

By replacing the initial gas used for the holding pressure with carbon dioxide having a significantly higher heat capacity and/or density than said gas more energy can be removed during the same time, so that the cycle time can be advantageously reduced.

In detail, when forming said hollow space by injecting said gas, for example nitrogen, into the cavity, the molding material may be simply pressed towards the inner side of the cavity by means of said gas so that the hollow space is formed in the molding material, i.e., in the part to be produced. In addition to this, a backflow of the molding material into the means (e.g. cylinder) for injecting the molding material into the cavity may occur when said gas is injected into the molding material residing in the cavity of the molding tool. Alternatively, when injecting said gas into the molding material residing in the cavity in order to produce said hollow space, the excess molding material may be pressed into an additional overflow cavity.

Particularly, as mentioned above, nitrogen, some other inert gas, or a mixture comprising nitrogen and/or another inert gas is used as said gas for forming the hollow space.

Further, particularly, said carbon dioxide or said mixture is in a liquid state when being injected into the at least one hollow space of the injection molded part.

According to a further aspect of the invention, the carbon dioxide is injected such into the hollow space of the part to be produced that it has a pressure between 50 bar and 150 bar inside said hollow space, preferably a pressure between 50 bar and 90 bar in order to cool said part and in order to maintain a certain pressure within the hollow space so as to maintain said hollow space upon cooling of the part.

In a first variant of the invention, the gas is injected via a first injector, e.g. a means for injecting gas into a cavity of a molding tool, into the at least one cavity of the molding tool, i.e. into the molding material residing in the cavity, wherein said gas is particularly also removed from the cavity via this first injector.

Further, in this variant, also the carbon dioxide is injected via the first injector into said hollow space and particularly also removed from the hollow space formed in the injection molded part through this first injector.

In an alternative variant of the invention, the carbon dioxide is injected into the hollow space formed in the injection molded part by means of said gas via an additional second injector. This second injector can be strategically positioned on the molding tool in order to further improve cooling of the part. Particularly, the second injector is arranged on a side being positioned opposite the side on which the first injector is arranged. Further, the second injector may be arranged at a point of the hollow space of said part where overheating occurs, i.e., at a point where the temperature is significantly higher than the temperatures in a surrounding of said point. Especially, the second injector may be positioned at the hottest point of said hollow space during injection molding.

Preferably, the afore-described hollow space has the form of channel, particularly an elongated channel, i.e., a channel that extends along an extension direction along which said channel has a larger dimension than along a direction across the extension direction. Of course said channel may comprise a non-vanishing curvature meaning that said extension direction changes orientation.

Further aspects, features and advantages of the present invention shall be described by means of the following description of embodiments of the present invention, wherein reference is made to the Figure. In this respect,

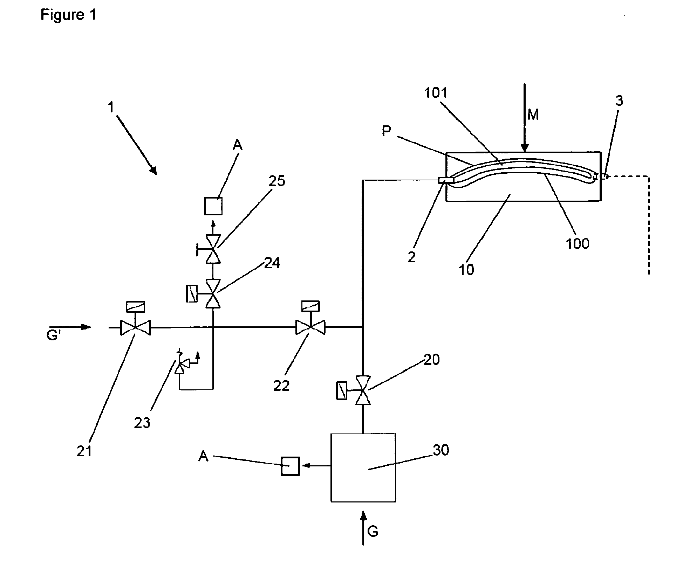

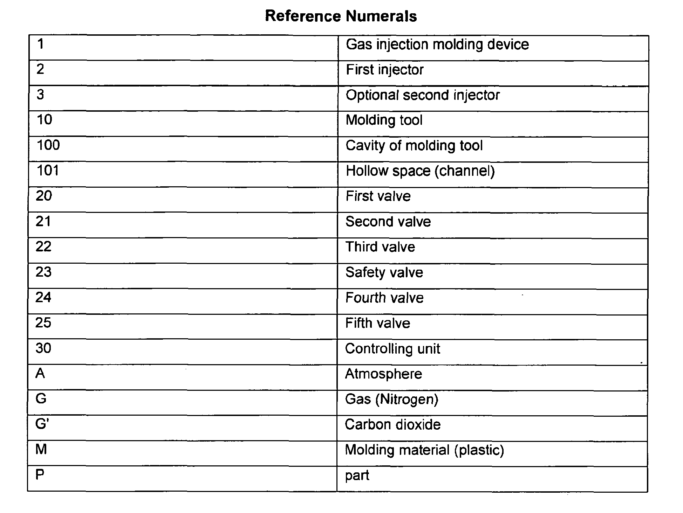

- Fig. 1: shows a schematical diagram of a molding device for conducting the method according to the invention.

Figure 1 shows a gas injection molding device 1 for conducting the method according to the invention, the device 1 comprises a molding tool 10, which may comprise two components or halves delimiting a negative form or cavity 100 when aligned with respect to each other. Said cavity 100 can be filled with a liquefied and/or molten molding material M, especially a plastic or polymer material, in order to produce a part P having a positive form corresponding to the negative form provided by said cavity 100.

In order to generate a hollow space 101 inside said part P a gas G, which is nitrogen, for instance, is injected into the cavity 100 via a first injector 2 with a pressure between 50 bar to 300 bar so that said nitrogen G pushes away the molding material M towards an inner side of the molding tool 10 delimiting said cavity 100, thus forming said hollow space 101, which may have the elongated shape of a channel as indicated in Figure 1.

The nitrogen G is preferably fed from a circular pipeline via a first valve 20 to said first injector 2, which first valve 20 may be a pneumatically operable piston stop valve 20. In order to control the pressure of said nitrogen G forming said channel 101, a control unit 30 is provided that is configured to control said first valve 20 accordingly.

After having formed the at least one channel 101, the nitrogen G is removed from the cavity 100 via the first injector 2 and discharged into the atmosphere A via said first valve 20.

After having discharged the nitrogen G, liquid carbon dioxide G' is fed from a bottle via a second valve 21 (e.g. a magnet valve) and a subsequent third valve 22 (e.g. a pneumatic piston stop valve) to the first injector 2 such that the pressure inside the formed channel 101 is now held at a level between 50 bar and 90 bar, for instance.

This ensures effective cooling of the part P while maintaining the channel 101 and the part's P quality.

By replacing the nitrogen G used for the holding pressure with liquid carbon dioxide G' much more energy can be removed due to the fact that liquid carbon dioxide G' has a higher heat capacity and density than the nitrogen G used for forming the channel 101.

Alternatively, the liquid carbon dioxide G' may enter the channel 101 through a second injector 3 placed at a point of the gas channel 101 where overheating occurs. This can also be at the opposite side of the first (main) injector 2 as shown in Figure 1. In case the channel 101 has a pipe shape as indicated in Fig. 1, a flow of liquid carbon dioxide G' can be arranged to remove even more energy.

In order to remove the carbon dioxide G' from the channel 101 and to discharge it into the atmosphere A, the third valve 22 is opened while the second valve and first valve 21, 20 are closed. The carbon dioxide G' is then discharged via a fourth valve (e.g. a magnet valve) and a fifth valve 25 (arranged in series), the fourth valve 24 being connected to the second and third valve 21, 22. The fifth valve 25 merely serves for controlling the amount of carbon dioxide G' that is discharged into the atmosphere A per unit time. The fourth valve 24 is closed when carbon dioxide G' is fed to the first injector 2. Further, for safety reasons, a safety valve 23 is connected to the second, third and fourth valve 21, 22, 24, which safety valve 23 opens when the pressure of the carbon dioxide G' exceeds a certain threshold value upon feeding it into the channel 101 via first injector 2 or upon discharging it via the third, fourth and fifth valve 22, 24, 25 into the atmosphere A (said threshold value may be 90 bar).

Controlling of the above described valves 21, 22, 24, 25 is preferably done by a first controlling means (not shown) that is configured to control the respective valves in order to inject carbon dioxide G' into the channel 101 and to discharge it out of said channel 101.

Alternatively, a second (separate) injector 3 indicated by the dashed lines in Fig. 1 may be used for injecting the carbon dioxide G' into the channel 101.

## Claims

1. A method for producing a part out of a molding material, comprising the steps of:
- injecting molding material (M) in a flowable state into a cavity (100) of a molding tool (10) in order to form a part (P),
- injecting a gas (G) into said cavity (100) in order to form at least one hollow space (101) within said part (P), and
- discharging said gas (G) out of the at least one hollow space (101) after forming said at least one hollow space (101),
**characterized in that**
carbon dioxide (G') is injected into said at least one hollow space (101) of said part (P) in order to cool said part (P).

2. The method as claimed in claim 1, **characterized in that** said gas (G) is nitrogen or comprises nitrogen.

3. The method as claimed in claim 1 or 2, **characterized in that** said carbon dioxide (G') is in a liquid state.

4. The method as claimed in one of the preceding claims, **characterized in that** the carbon dioxide (G') is injected with a pressure between 50 bar and 150 bar, preferably with a pressure between 50 bar and 90 bar.

5. The method as claimed in one of the preceding claims, **characterized in that** said gas (G) is injected via a first injector (2) into the cavity (100) of the molding tool (10).

6. The method as claimed in claim 5, **characterized in that** said gas (G) is discharged from the cavity (100) via the first injector (2).

7. The method as claimed in claim 5 or 6, **characterized in that** the carbon dioxide (G') is also injected via the first injector (2) into said hollow space (101).

8. The method as claimed in claims 1 to 6, **characterized in that** the carbon dioxide (G') is injected into the hollow space (101) via a second injector (3), wherein particularly the second injector (3) is arranged opposite the first injector (2) or at a point where the temperature after injection of the molding material (M) exceeds a certain threshold temperature, particularly at the hottest point of said hollow space (101) during injection molding of said part (P).

9. The method as claimed in one of the preceding claims, **characterized in that** the hollow space (101) is shaped as a channel, particularly as an elongated channel.

10. The method as claimed in one of the preceding claims, **characterized in that** the molding material (M) is pushed towards the inner side of the cavity (100) by means of said gas (G) in order to form said hollow space (101), wherein particularly molding material (M) flows back into a means used for injecting the molding material (M) into the cavity (100) when said gas (G) is injected into the molding material (M) residing in the cavity (100) of the molding tool (10) in order to form said hollow space (101), or wherein particularly excess molding material (M) is pressed into an additional overflow cavity when said gas (G) is injected into the molding material (M) residing in the cavity (100) of said molding tool (10) in order to form said hollow space (101).
